Europäisches Patentamt

European Patent Office

Office européen des brevets

(19)

(11) Numéro de publication: **0 000 145**
**B1**

(12)

# FASCICULE DE BREVET EUROPEEN

(21) Numéro de dépôt: **78100157.3**

(22) Date de dépôt: **15.06.78**

(51) Int. Cl.³: **G 02 B 5/14, C 03 B 37/10**

(54) Connecteur pour fibre optique et procédé de raccordement d'une fibre optique à un connecteur

(30) Priorité: **22.06.77 FR 7719084**

(43) Date de publication de la demande:
**10.01.79 Bulletin 79/01**

(45) Mention de la délivrance du brevet:
**03.09.80 Bulletin 80/18**

(84) Etats contractants désignés:
**BE CH DE FR GB NL SE**

(56) Documents cités:
**FR - A - 2 293 720**
**FR - A - 2 330 744**

(73) Titulaire: **Société Anonyme dite: Compagnie Generale d'Electricite**
**54, rue La Boétie**
**F—75382 Paris Cedex 08 FR**

(72) Inventeur: **Tardy, André**
**6, résidence Chanteloup**
**F—91290 St Germain Les Arpajon FR**

(74) Mandataire: **Weinmiller, Jürgen**
**Zeppelinstrasse 63**
**D—8000 München 80 DE**

Connecteur pour fibre optique et procédé de raccordement d'une fibre optique à un connecteur

L'invention concerne un connecteur pour fibre optique et un procédé de raccordement d'une fibre optique à un connecteur.

Une telle fibre comporte par exemple un coeur de verre d'un diamètre de 100 microns entouré par une gaine optique de même matière et d'indice optique plus faible, elle même entourée par une gaine externe de protection mécanique, par exemple en matière plastique.

Le connecteur comporte habituellement des "moyens de maintien" pour permettre la manipulation précise d'une extrémité de la fibre optique à connecter dénudée de sa gaine externe. D'autres moyens sont utilisés pour guider les moyens de maintien de manière à permettre de placer l'extrémité maintenue dans la position précise qui assure la connexion optique souhaitée, par exemple la connexion à une autre fibre optique maintenue dans un connecteur de type complémentaire (un connecteur mâle étant complémentaire d'un connecteur femelle). L'ensemble de ces moyens de maintien et éventuellement de guidage constitue l'élément connectant du connecteur, dont d'autres éléments seront décrits plus loin.

La précision obtenue quant à la position de la fibre est d'autant meilleure que son diamètre est plus proche de celui pour lequel les moyens de maintien ont été prévus. Ces moyens peuvent être par exemple constitués par trois tiges d'acier de même diamètre serrées côte à côte avec leurs axes passant par les trois sommets d'un triangle équilatéral situé dans un plan perpendiculaire a ces axes. Ces trois tiges délimitent entre elles un canal de maintien pour une fibre de verre d'un certain diamètre qui peut être appelé "diamètre adapté". Si une fibre a un diamètre supérieur au diamètre adapté, elle ne peut pas être introduite dans le canal de maintien. Si une fibre a un diamètre inférieur au diamètre adapté, elle peut se déplacer transversalement dans le canal de maintien, et une bonne connexion optique ne peut pas être pratiquement obtenue. Si on utilise d'autre types de moyens de maintien, il reste évident qu'ils permettront d'obtenir une connexion optique d'autant meilleure que la fibre de verre à connecter aura un diamètre plus proche d'un "diamètre adapté".

Or, dans une production industrielle de fibres optiques, on constate généralement des variations de l'ordre de 4% de part et d'autre d'un diamètre "nominal" souhaité. On peut espérer que ces variations seront abaissées par exemple à 2% dans l'avenir, mais non qu'elles seront supprimées. Il apparait donc un besoin évident d'améliorer les connecteurs optiques de manière à permettre d'obtenir de bonnes connexions optiques malgré les incertitudes en ce qui concerne le diamètre exact des fibres à connecter.

Un connecteur comporte par ailleurs de manière habituelle des moyens de blocage de la gaine externe de la fibre à connecter. Ces moyens permettent d'immobiliser l'extrémité de cette gaine par rapport au connecteur de telle sorte que si on tire sur la fibre à l'extérieur du connecteur, l'effort soit transmis par cette gaine jusqu'à ces moyens de blocage et soit ainsi transmis à l'ensemble du connecteur par l'intermédiaire de ces moyens, et non pas par l'intermédiaire du segment de fibre de verre maintenu dans l'élément connectant. Ce segment risquerait en effet d'être déplacé ou brisé s'il devait transmettre l'effort exercé sur la fibre.

La présente invention a pour but la réalisation d'un connecteur pour fibre optique permettant d'obtenir de bonnes connexions optiques malgré l'imprécision avec laquelle le diamètre de la fibre à connecter peut être connu à l'avance.

Elle a pour objet un connecteur pour fibre optique comportant:

—un élément connectant muni de moyens de maintien aptes à maintenir un segment de fibre optique de diamètre prédéterminé, et aptes à être guidés de manière à permettre de mettre ce segment maintenu en alignement et en contact par son extrémité avant avec une autre fibre optique maintenue par un élément connectant d'un autre connecteur, de manière à assurer la connexion optique entre ce segment maintenu et cette autre fibre optique,

—et un élément de blocage solidaire de l'élément connectant et comportant des moyens de blocage pour permettre de fixer une fibre optique "de transmission" en alignement avec ledit segment maintenu de manière à éviter tout effort sur ce segment lorsque ce segment est en continuité mécanique avec la fibre optique de transmission et lorsqu'on exerce un effort sur cette fibre au-delà de ces moyens de blocage,

—caractérisé par le fait qu'il comporte en outre un élément intermédiaire assurant la solidarisation entre l'élément connectant et l'élement de blocage, cet élément intermédiaire présentant au moins une ouverture permettant d'accéder à une zone de contact entre l'extrémité arrière dudit segment maintenu et l'extrémité de ladite fibre de transmission, cette ouverture étant suffisamment large pour permettre à travers elle de réaliser une soudure assurant la continuité optique entre ce segment maintenu et cette fibre de transmission,

—et un segment maintenu dans l'élément connectant, ayant une longueur inférieure à cinq centimètres, et ayant son extrémité avant munie d'un revêtement antireflet.

Elle a aussi pour objet un procédé de raccordement d'une fibre optique à un connecteur caractérisé par le fait qu'il comporte les étapes suivantes:

—on insère d'abord dans l'élément connectant du connecteur, un segment de fibre optique d'une longueur inférieure à cinq centimètres et diamètre auquel l'élément connecteur est adapté, et on assure le maintien de ce segment dans cet élément, ce segment comportant une extrémité avant par laquelle la connection doit pouvoir se réaliser, et une extrémité arrière libre,

—on insère ensuite, dans un élément de blocage du connecteur, la zone d'extrémité de la fibre optique "de transmission" qui doit être raccordée à ce connecteur,

—on met en alignement et on rapproche l'extrémité de cette fibre de transmission de l'extrémité arrière du segment maintenu,

—on chauffe ces deux extrémités de manière à réaliser une soudure assurant la continuité optique entre cette fibre de transmission et ce segment maintenu,

—et on immobilise la fibre de transmission par rapport à l'élément connectant par l'intermédiaire de l'élément de blocage et d'un élément intermédiaire solidarisant cet élément de blocage avec cet élément connectant.

Elle a encore pour objet un procédé de réalisation d'une connexion optique amovible entre deux fibres optiques "de transmission" à l'aide de deux connecteurs complémentaires coopérant entre eux et comportant chacun:

—un élément connectant muni de moyens de maintien aptes à maintenir un segment de fibre optique de diamètre prédéterminé et aptes à être guidés pour mettre le segment maintenu en alignement et en contact par son extrémité avant avec un autre segment de fibre optique maintenu par l'élément connectant du connecteur complémentaire de manière à assurer la connexion optique entre ces deux segments maintenus, ce procédé étant caractérisé par le fait qu'il comporte les étapes suivantes:

—on dispose un segment de fibre optique dans chaque élément connectant de manière que ce segment soit maintenu par lesdits moyens de maintien, ce segment maintenu ayant une longueur inférieure à cinq centimètres et ayant son extrémité avant munie d'un revêtement antireflet,

—et on soude l'extrémité arrière de chacun des deux segments maintenus à l'extrémité de la fibre de transmission correspondante.

Il est à remarquer que l'on savait déjà classiquement réaliser une connexion optique entre deux fibres par soudure des extrémités de ces fibres. Mais la connexion ainsi réalisée n'était évidemment pas amovible. Elle occasionnait une perte d'energie lumineuse, voisine en général de 6%.

Une connexion réalisée entre deux fibres optiques à l'aide de deux connecteurs selon l'invention de types complémentaires présente l'inconvénient évident que l'on additionne trois causes de perte d'énergie lumineuse, à savoir une soudure dans le connecteur mâle, la traversée d'un intervalle d'air entre les extrémités en regard des deux segments maintenus dans les éléments connectants des deux connecteurs, et une deuxième soudure dans le connecteur femelle. Compte tenu du fait que, pour tout homme de l'art, le but à atteindre lors de la réalisation de la connexion était de diminuer la perte totale d'énergie lumineuse, cette addition de trois causes de perte pouvait sembler empêcher absolument d'atteindre ce but. Cette situation est évidemment très différente de celle des connecteurs électriques, qui comportent parfois des soudures entre des fiches de connexion, mâles ou femelles, et les extrémités des fils métalliques à raccorder. En effet, dans ces connecteurs électriques on ne rencontre, ni quant à l'alignement des éléments, ni quant aux pertes aux soudures, aucun problème de difficulté comparable à celles rencontrées dans les connecteurs optiques. On sait réaliser des soudures présentant des résistances électriques aussi faibles que nécessaire.

Pour apercevoir les avantages de la présente invention il convient d'étudier les conditions dans lesquelles le signal lumineux perd de l'énergie en divers points de son trajet selon que la connexion optique entre deux fibres optiques est réalisée à l'aide de deux connecteurs complémentaires de type connu, ou de deux connecteurs complémentaires conformes à l'invention. Cette étude va être faite approximativement ci-après dans le cas où les fibres à connecter sont d'un type courant, c'est-à-dire présentent un couplage moyen entre les divers modes de propagation de la lumière, et une incertitude moyenne sur le diamètre de la fibre de verre. Elle tient compte des trois faits suivants qui permettent de comprendre l'efficacité de l'invention pour atteindre le but recherché:

Premièrement le segment de fibre maintenu dans l'élément connectant a une faible longueur. Son diamètre peut donc être choisi avec toute la précision désirable sans qu'il en résulte de dépense supplémentaire gênante. Deuxièmement ce segment court peut être inséré dans l'élément connectant dans l'usine même dans laquelle le connecteur est fabriqué. Il en résulte que son extrémité avant qui doit être en contact avec l'intervalle d'air inévitable entre fibres à connecter, peut être pourvue aisément d'un revêtement du type "antireflet" qui diminue les pertes par réflexion à l'interface verre-air. Au contraire il n'est pratiquement pas possible de déposer un tel revêtement sur l'extrémité d'une fibre de transmission de grande longueur coupée sur le chantier de réalisation d'un système de transmission. Troisièmement, il est connu qu'une soudure entre deux fibres occasionne des pertes d'énergie lumineuse non pas sur l'ensemble des modes de propagation de la lumière dans les fibres, mais seulement sur certains de ces modes, correspondant à des rayons lumineux formant des angles relativement grands avec la surface de séparation entre le coeur de la fibre et la gaine d'indice plus faible. Au cours de la propagation ultérieure de la lumière dans la fibre, après la soudure, ces modes reprennent progressivement de l'énergie au dépens des autres modes, grâce au couplage existant entre tous les modes se propageant dans une fibre. Ce couplage est d'autant plus intense que la fibre est de moins bonne qualité. Il résulte de ceci que, si deux soudures se suivent sur une ligne à très petite distance, les modes qui ont perdu leur énergie en franchissant la première soudure n'ont pas le temps de prendre une énergie importante aux autres modes avant de recontrer la deuxième soudure. La traversée de cette deuxième soudure ne provoquera donc qu'une faible perte supplémentaire d'énergie. Au contraire si les deux soudures sont très éloignées l'une de l'autre, l'équilibre entre les modes se sera complètement rétabli quand la lumière parviendra à la deuxième soudure, et cette deuxième soudure fera perdre à la lumière la même proportion de son énergie que la première. Pour une fibre de qualité courante, une seule soudure provoque par exemple une perte d'énergie de 6%. Deux soudures éloignées de 10 cm provoquent alors une perte totale de 8% environ, alors que si elles sont éloignées de 40 cm, la perte totale atteint presque 12%. L'importance de ce troisième fait apparait lorsqu'on sait qu'il est facile de donner au segment maintenu une longueur inférieure à 5 cm, et que la distance entre les deux soudures nécessaires à la réalisation d'une connexion selon l'invention entre deux fibres de transmission est égale à la somme des longueurs des deux segments maintenus dans les deux connecteurs complémentaires coopérant entre eux pour assurer cette connection.

Les pertes d'une connexion selon l'invention sont alors de 8% pour les deux soudures et de 1% pour les deux interfaces air-verre aux extrémités avant des deux segments maintenus avec revêtement antireflet. La perte totale est de 9%.

Une connexion réalisée sans l'invention provoquerait dans les mêmes conditions une perte d'environ 8% pour les deux interfaces air-verre, sans revêtements antireflet, et une perte pouvant varier entre 1% et 15% en raison du presque inévitable mauvais alignement des deux fibres et de la différence aléatoire de leurs diamètres. La perte totale varierait donc de manière aléatoire entre 9% et presque 23%.

A l'aide des figures schématiques 1 à 8 ci-jointes, on va décrire ci-après, à titre non limitatif, comment l'invention peut être mise en oeuvre.

Les éléments qui se correspondent sur plusieurs de ces figures y sont désignés par les mêmes signes de référence.

La figure 1 représente une vue en demie-coupe par un plan axial de l'ensemble intermédiaire d'un connecteur selon l'invention,

Les figures 2, 3 et 4 représentent des vues de l'ensemble représenté figure 1 en coupe par des plans perpendiculaires à l'axe respectivement II—II, III—III, IV—IV.

La figure 5 représente une vue en demie coupe par un plan axial de l'élément de blocage d'un même connecteur.

La figure 6 représente une vue de ce même connecteur en coupe par un plan axial.

La figure 7 représente une vue en perspective d'un appareil permettant la mise en oeuvre des procédés selon l'invention.

La figure 8 représente un détail de la figure 7.

Les figures 9 et 10 sont respectivement analogues aux figures 1 et 2 et en diffèrent seulement par le fait qu'elles représentent des éléments d'un connecteur complémentaire de celui des figures 1 et 2.

Le connecteur de type femelle qui va être décrit est constitué d'un ensemble d'éléments disposés coaxialement autour et le long d'un axe commun 4. C'est selon cet axe que se succèdent les fibres et segments de fibres qui doivent être connectés, de manière à réaliser une liaison optique permettant la transmission d'un signal. Le diamètre de fibre est trop petit, par exemple 100 microns, pour pouvoir être représenté à son échelle exacte sur les figures. Les éléments du connecteur peuvent être constitués par exemple en laiton, sauf certains d'entre eux dont le matériau constitutif doit être évidemment différent et sera parfois indiqué.

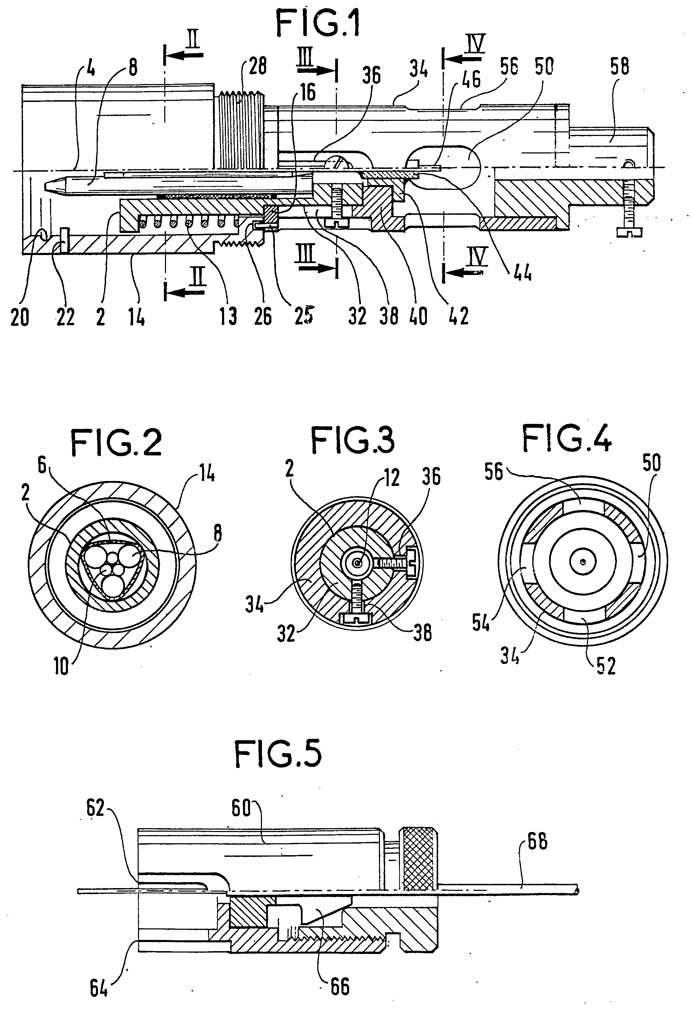

Ce connecteur comporte un élément con-nectant 2 (voir figure 1) ayant la forme générale d'un tube cylindrique épais. A l'intérieur de ce tube on a fixé, par exemple par collage, un assemblage constitué par un tube de serrage 6 constitué d'un acier à ressort mince qui enserre, par déformation élastique, trois tiges de guidage 8, d'un diamètre de 1,5 mm par exemple, entre lesquelles sont serrées trois tiges de maintien 10 d'un diamètre de 0,82 mm par exemple, qui délimitent entre elles un canal de maintien axial dans lequel est maintenu un segment de fibre optique 12.

Toutes ces tiges sont parallèles à l'axe 4. Elles sont constituées d'acier dur et usinées avec précision de manière à leur donner une forme exactement cylindrique et un diamètre bien déterminé. Elles sont coextensives le long de l'axe 4 sauf que les tiges de guidage 8 débordent vers l'avant du connecteur, c'est-à-dire vers la gauche sur les figures 1 à 6, par rapport aux tiges de maintien. Chaque tige de maintien est en contact latéral avec les deux autres. Chaque tige de guidage est en contact, sauf dans sa partie débordante, avec deux tiges de maintien. L'extrémité avant du segment de fibre maintenu est dans le même plan perpendiculaire à l'axe que les extrémités avant des trois tiges de maintien.

Cette extrémité avant a reçu, avant son introduction entre les tiges de maintien 10, un revêtement antireflet double couche constitué par exemple par une couche d'oxyde de titane $TiO_2$, et une couche de fluorure de mag-nésium $MgF_2$.

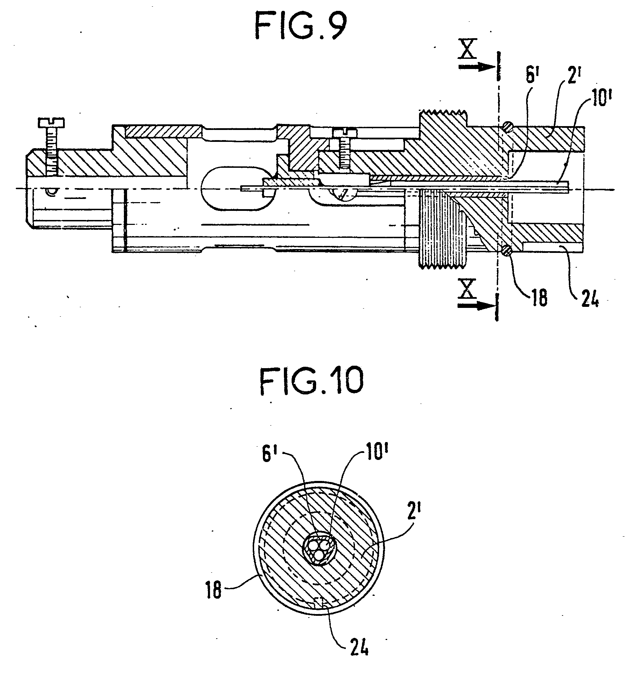

Les parties débordantes des trois tiges de guidage forment entre elles un canal de guidage dans lequel peut s'engager un ensemble de trois autres tiges de maintien 10' faisant partie d'un connecteur de type mâle (voir figure 9 et 10).

Un tel connecteur est analogue au connecteur femelle décrit, sauf qu'il ne comporte pas de tiges de guidage, le tube de serrage 6' analogue au tube 6 ayant alors un diamètre plus faible de manière à assurer directement le serrage des tiges de maintien, l'élément connectant 2' analogue à l'élément 2 ayant alors un diamètre intérieur diminué de manière correspondante.

Une telle disposition permet d'obtenir un alignement très précis des segments de fibre disposés dans les deux canaux de maintien formés par les deux ensembles de trois tiges de maintien. Elle nécessite cependant pour cela que le diamètre des tiges de maintien soit égal à celui de la fibre multiplié par 6,46 de manière que chacune de ces tiges soit en contact avec la fibre. Cette exigence peut être satisfaite si l'on connaît bien le diamètre de la fibre, lors de l'usinage des tiges de maintien. Ceci est facile à obtenir lorsque le segment de fibre maintenu entre les tiges de maintien à une très petite longueur, voisine par exemple de 2,5 cm. Ce ne serait pratiquement pas possible avec une fibre de grande longueur.

L'élément connectant 2 est muni à son extrémité avant d'un épaulement externe permettant l'appui de l'extrémité avant d'un ressort hélicoïdal 13 (figure 1) comprimé dont l'extrémité arrière s'appuie sur un épaulement interne d'un capot avant 14 qui entoure l'élément connectant 2 avec jeu radial, et qui est repoussé par ce ressort vers l'arrière contre une butée 16 fixée sur l'élément connectant 2. Cette disposition permet à ce capot de se déplacer, élastiquement par rapport à l'élément 2, d'une part vers l'avant sur plusieurs millimètres, d'autre part radialement.

Son but apparaît lorsque l'on réalise la connexion amovible entre le connecteur mâle (figure 9) et le connecteur femelle (figure 1) par engagement du capot avant 14 du connecteur femelle autour de l'élément connectant 2' du connecteur mâle et encliquetage de ce capot sur cet élément connectant grâce à un anneau 18 constitué d'un élastomère, porté par l'élément connectant 2', et coopérant avec une gorge interne 20 du capot 14. Les tiges de maintien 10' du connecteur mâle s'engagent alors dans le canal de guidage constitué par les tiges de guidage 8 et viennent en butée contre l'extrémité avant des tiges de maintien 10. Elles sont alors maintenues élastiquement en appui contre cette extrémité par l'intermédiaire de l'élément connectant 2', du capot avant 14, du ressort 12 comprimé, et de l'élément connectant 2.

On assure ainsi le contact entre les extrémités avant des deux segments de fibres optiques maintenus dans les deux éléments connectants. D'autre part l'alignement de ces segments est assuré par les tiges de guidage 8 usinées avec précision, et non par l'intermédiaire du capot avant 14 en raison du jeu radial de celui-ci par rapport à l'élément connectant 2. Un prépositionnement angulaire approximatif des tiges de maintien 10' par rapport aux tiges de guidage 8 est assuré par l'intermédiaire d'un ergot radial 22 porté intérieurement par le capot 14 et coopérant avec une rainure longitudinale 24 creusée extérieurement dans l'élément connectant 2', et par l'intermédiaire d'un ergot longitudinal 25 porté par la butée 16 et coopérant avec un creux 26 porté par l'élément connectant 2.

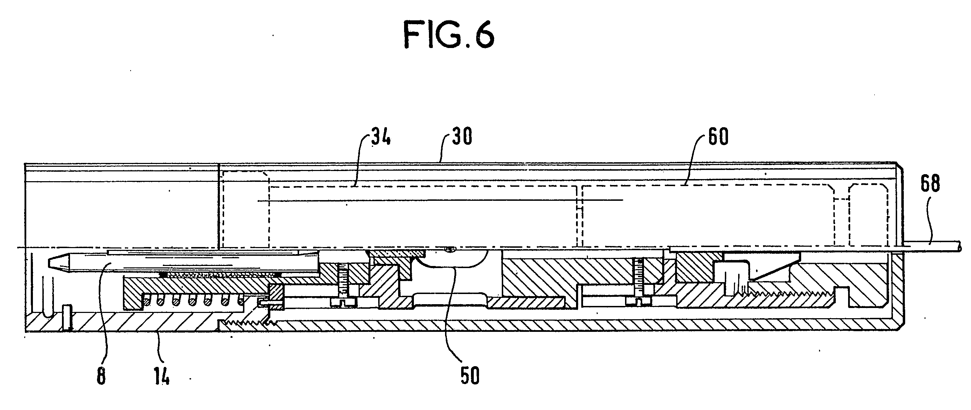

Le capot avant 14 du connecteur femelle et l'élément connectant 2' du connecteur mâle portent chacun un filetage 28 permettant la fixation par vissage d'un capot arrière tel que 30 (figure 6) entourant les parties du connecteur situées à l'arrière des éléments connectants en laissant un certain jeu radial. Chaque élément connectant comporte en outre un prolongement arrière tel que 32 (figure 1 et 3) permettant la fixation d'un élément intermédiaire tel que 34. Chacun des éléments du connecteur mâle qui vont être décrits maintenant correspond à un élément identique du connecteur femelle.

L'élément intermédiaire 34 a la forme d'un tube percé à son extrémité avant de deux rainures parallèles longitudinales 36 et 38 décalées angulairement de 90° autour de l'axe commun. Chacune de ces rainures permet le passage d'une vis assurant la fixation de cet élément sur le prolongement arrière 32, avec possibilité de réglage longitudinal.

Un peu plus en arrière l'élément intermédiaire 34 comporte un épaississement intérieur 40 permettant le logement d'une douille 42 percée d'un alésage axial dans lequel est fixé un porte-fibre 44 en céramique. Le segment de fibre maintenu 12 est fixé par sa partie arrière 46 dans ce porte fibre, l'extrémité arrière de ce segment dépassant vers l'arrière.

Les dispositions qui viennent d'être décrites permettent, par coulissement longitudinal des vis dans les rainures 36 et 38, d'assurer que l'extrémité avant du segment maintenu se trouve dans le plan des extrémités avant des tiges de maintien 10.

Dans un premier temps l'extrémité arrière du segment maintenu est libre. En face de cette extrémité arrière, la paroi de l'élément intermédiaire 34 est percée de quatre ouvertures 50, 52, 54 et 56 décalées de 90°, et destinées à permettre de réaliser une soudure sur cette extrémité. Ces ouvertures ont par exemple une longueur de 7 mm parallèlement à l'axe 4 et s'étendent chacune sur un arc de 30° autour de l'axe 4, l'élément intermédiaire ayant un diamètre de 10 mm. Elle permettent d'accéder à une "zone de contact" axiale dans laquelle se trouve l'extrémité arrière du segment maintenu.

L'élément intermédiaire se termine par un prolongement arrière 58 destiné à permettre la fixation d'un élément de blocage, et évidé sur l'axe pour permettre le passage d'une fibre optique de transmission.

L'élément de blocage 60 (figure 5) a une forme générale tubulaire. Son extrémité avant est percée de deux rainures parallèles longitudinales 62 et 64 décalées angulairement de 90° autour de l'axe commun, et permettant chacune le passage d'une vis pour la fixation réglable de cet élément sur le prolongement arrière 58 de l'élément intermédiaire. Il comporte intérieurement une pince à quatre mors symétriques tels que 66 qui délimitent un canal axial et qui peuvent se déplacer radialement vers l'axe sous l'action d'un écrou à déplacement longitudinal qui coopère avec les faces extérieures coniques des quatre mors. On peut assurer ainsi le serrage sur l'axe d'une fibre optique "de transmission" 68 munie d'une gaine externe en polyamide.

L'extrémité avant de cette fibre est dénudée de sa gaine et dépasse vers l'avant au delà de l'élément de blocage 60 de manière à pouvoir rejoindre l'extrémité arrière du segment maintenu 46 lorsque cet élément de blocage set fixé sur le prolongement 58. Ceci est représenté sur la figure 6 où ces deux extrémités sont soudées l'une à l'autre et où les ouvertures telles que 50 sont masquées par le capot arrière 30. Le jeu radial entre ce capot et les éléments intermédiaire 34 et de blocage 60 permet, lors de la connexion avec un connecteur mâle, d'assurer que la position des éléments connectant 2, intermédiaire 34 et de blocage 60, est déterminée par l'intermédiaire des tiges de guidage 8 et non par celui du capot avant 14.

Quoique cela ne soit pas représenté il peut en fait être avantageux d'entourer la fibre de transmission 68 par une deuxième gaine externe plus résistante autour de la première et de bloquer cette deuxième gaine externe dans un deuxième élément de blocage situé en arrière de l'élément 60, avec du mou de la fibre entre ces deux éléments de blocage (c'est-à-dire un excès de longueur donnant à la fibre une forme légèrement ondulée). Ceci permet d'éviter des efforts de traction sur la première gaine externe.

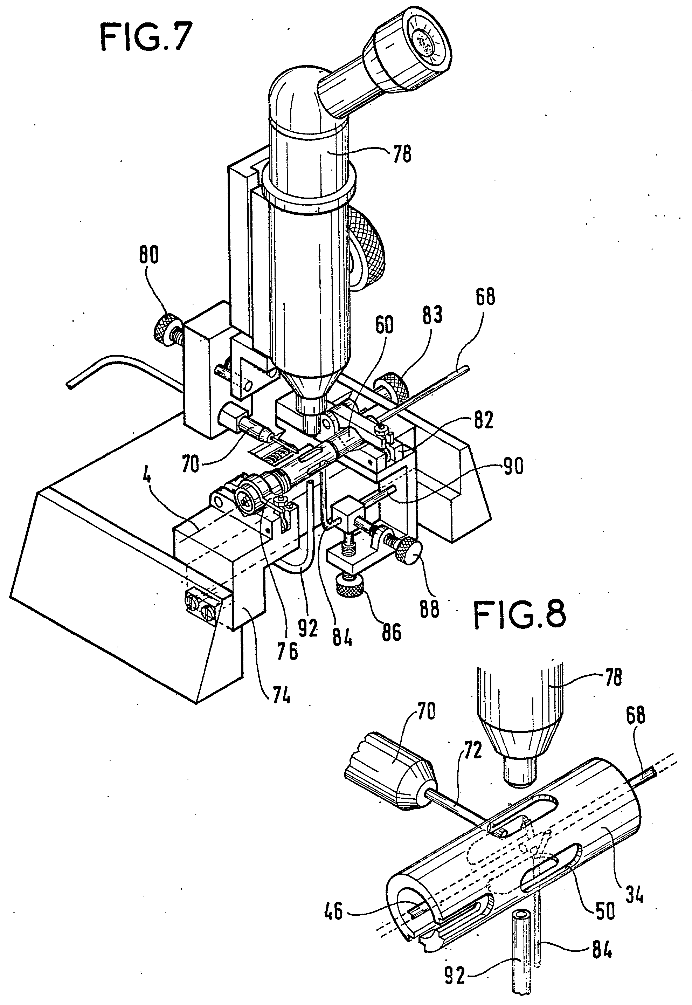

La soudure des deux extrémités de fibres est effectuée à l'aide d'un micro chalumeau oxhydrique 70. Le diamètre dè l'injecteur 72 (aiguille métallique creuse) est de 0,1 mm (ou 0,2 mm). La température de la flamme permet d'obtenir la température de ramollissement (de l'ordre de 1700°) de la silice. Les dimensions réduites de la flamme (longueur 0,5 mm, diamètre 0,2 mm) permettent la soudure dans un espace réduit. Cette caractéristique est nécessaire pour pouvoir effectuer la soudure des fibres à l'intérieur même du connecteur. En effet, l'opération de soudure entraîne une fragilisation des fibres au voisinage du joint. Cette fragilisation interdit toute manipulation sur la fibre soudée. C'est pourquoi la fibre de transmission 68 est rendue solidaire de l'élément de blocage 60, préalablement à l'opération de soudure. Par rapport aux autres procédés, arc entre deux électrodes, focalisation de lumière issue d'une lampe au foyer d'un miroir élliptique, la forme de l'injecteur facilite l'opération de soudure à l'intérieur du connecteur. Un exemple d'outil de soudure est illustré par les vue en perspective des différents dispositifs qui le composent (figures 7 et 8).

L'élément connectant est positionné sur un support fixe 74 comportant une rainure en V d'alignement. Un presseur 76 immobilise la pièce.

Par observation grâce à un viseur optique 78 de grandissement de l'ordre de 150, l'opérateur fait coïncider à la main l'axe et l'extrémité arrière du segment de fibre maintenu avec deux traits orthogonaux du réticule du viseur optique.

Par construction, les deux traits du réticule correspondent à l'axe d'amenée de l'injecteur et à l'axe théorique de travail du micro-chalumeau qui est déplaçable selon son axe horizontal perpendiculaire à l'axe 4, grâce à une vis 80.

La position travail du micro chalumeau est réglée grâce à une butée. La distance de travail entre l'extrémité de l'injecteur et l'axe de la fibre est de 0,8 mm.

Du fait que l'équipage mobile de l'injecteur est solidaire dans le sens vertical de la platine de mise au point du viseur, l'opération de mise au point amène automatiquement l'axe de l'injecteur dans le plan horizontal de la fibre. L'opérateur positionne l'élément de blocage 60 sur un support 82 mobile parallèlement à l'axe 4 à l'aide d'une vis 83 après avoir préalablement introduit et bloqué la fibre de transmission dans cet élément.

Un manipulateur 84 solidaire du support mobile 82 permet de régler la position de l'extrémité de la fibre selon deux axes orthogonaux entre eux et à l'axe 4. Il est commandé par deux vis 86 et 88 coopérant avec une tige 90 flexible élastiquement, et se termine par une pièce en V permettant d'emprisonner la fibre 68. Par observation au viseur, le manipulateur permet de rendre coaxiale les deux fibres en présence, la translation du support 82 permettant d'exercer une pression entre les fibres.

L'observation est facilitée par un éclairage de la zone de contact à la fois dans la direction du viseur 78 et dans la direction prependiculaire (non représenté) à ce dernier, à l'aide de deux fibres optiques d'éclairage telles que 92.

L'opérateur observe deux raies lumineuses, l'une liée à la réfraction de la lumière par la fibre, l'autre moins intense et plus fine liée à la réflexion de la lumière issue de la direction normale au viseur. L'alignement des raies relatives aux deux fibres entraine l'alignement des fibres dans les deux axes. L'alignement des raies complète un premier alignement résultant de l'observation nette des deux fibres et de l'observation directe du décalage dans le plan normal au viseur.

Il reste à l'operateur à amener l'injecteur à distance convenable des fibres par poussée sur l'équipage mobile jusqu'au contact de la butée préréglée par construction.

L'opérateur surveille dans le viseur 78 l'opération de soudure de durée de l'ordre de 5 secondes.

Toutes les opérations de soudure se font en passant par les quatre ouvertures 50, 52, 54, et 56.

Après soudure, avant le retrait du connecteur de son support, l'opérateur fixe l'élément de blocage à l'élément intermédiaire au connecteur 34 à l'aide des deux vis disposées dans les rainures 60 et 62.

## Revendications

1. Connecteur pour fibre optique comportant:
—un élément connectant (2) muni de moyens de maintien (10) aptes à maintenir une fibre optique (12) de diamètre prédéterminé, et aptes à être guidés de manière à permettre de mettre cette fibre maintenue en alignement et en contact par son extrémité avant avec une autre fibre optique maintenue par un élément connectant d'un autre connecteur, de manière à assurer la connexion optique entre ces deux fibres,
—et un élément de blocage (60) solidaire de l'élément connectant et comportant des moyens de blocage (66) en arrière des moyens de maintien pour permettre de fixer une fibre optique "de transmission" en alignement avec ces moyens de maintien de manière à éviter tout effort sur cette fibre de transmission en avant de ces moyens de blocage lorsque on exerce un effort sur cette fibre en arrière de ces moyens de blocage,
—caractérisé par le fait qu'il comporte en outre un segment de fibre optique (12) maintenu dans l'élément connectant (2), ayant une longueur inférieure à cinq centimètres, et ayant son extrémité avant munie d'un revêtement antireflet,
—et un élément intermédiaire (34) assurant la solidarisation entre l'élément connectant (2) et l'élément de blocage (60), cet élément intermédiaire présentant au moins une ouverture (50) permettant d'accéder à une zone de contact entre l'extrémité arrière (46) dudit segment maintenu (12) et l'extrémité de ladite fibre de transmission (68), cette ouverture étant suffisamment large pour permettre à travers elle de réaliser une soudure assurant la continuité optique entre l'extrémité arrière de ce segment maintenu et l'extrémité de cette fibre de transmission.

2. Connecteur selon la revendication 1, caractérisé par le fait qu'il est muni de moyens de coulissement blocables (62, 64) pour permettre d'abord un déplacement de l'élément de blocage (60) par rapport à l'élément connectant (2) parallèlement audit segment maintenu (12) et pour permettre ensuite de solidariser complètement ces deux éléments.

3. Connecteur selon la revendication 1, présentant une structure générale coaxiale autour d'un axe (4) parallèle audit segment maintenu (12), caractérisé par le fait que ledit élément intermédiaire (34) a la forme d'un tube entourant ledit axe et est percé de plusieurs ouvertures (50, 52, 54, 56) angulairement réparties autour de ladite zone de contact,
—ce connecteur comportant en outre un capot de protection (30) pouvant coulisser parallèlement audit axe (4) de manière à venir entourer l'élément intermédiaire en obturant ces ouvertures.

4. Procédé de raccordement d'une fibre optique "de transmission" à un connecteur caractérisé par le fait qu'il comporte les étapes suivantes:
—on insère dans un élément connectant (2) du connecteur, un segment de fibre optique (12) d'une longueur inférieure à cinq centimètres et d'un diamètre auquel l'élément connectant est adapté et on assure le maintien de ce segment dans cet élément, ce segment comportant une extrémité avant par laquelle la connection doit pouvoir se réaliser, et une extrémité arrière libre (46),
—on insère, dans un élément de blocage (60) du connecteur, la zone d'extrémité (68) de la fibre optique "de transmission" qui doit être raccordée à ce connecteur,
—on met en alignement et on rapproche l'extrémité de cette fibre de transmission de l'extrémité arrière du segment maintenu,
—on chauffe ces deux extrémités de manière à réaliser une soudure assurant la continuité optique entre cette fibre de transmission et ce segment maintenu,
—et on immobilise la fibre de transmission par rapport à l'élément connectant par l'intermédiaire de l'élément de blocage (60) et d'un élément intermédiaire (34) solidarisant cet élément de blocage avec cet élément connectant.

5. Procédé selon la revendication 4, caractérisé par le fait qu'avant d'insérer ledit segment de fibre (12) dans l'élément connectant (2), on fait subir à sa face avant un traitement propre à faciliter la transmission de lumière à travers cette face.

6. Procédé selon la revendication 4, caractérisé par le fait que l'étape par laquelle on met en alignement et on rapproche l'extrémité de la fibre de transmission (68) de l'extrémité arrière du segment maintenu (12) comporte elle même les étapes suivantes:
—on relie l'élément de blocage (60) à l'élément connectant (2) par l'intermédiaire dudit élément intermédiaire (34) de manière à mettre la zone d'extrémité de la fibre de transmission en alignement avec le segment maintenu et à permettre un déplacement de l'élément de blocage par rapport à l'élément connectant parallèlement au segment maintenu, cet élément intermédiaire étant muni d'au moins une ouverture (50) pour permettre d'accéder à l'extrémité arrière (46) du segment maintenu,

—on immobilise la zone d'extrémité de la fibre de transmission dans l'élément de blocage,

—et on déplace l'élément de blocage par rapport à l'élément connectant pour rapprocher l'extrémité de la fibre de transmission de l'extrémité arrière du segment maintenu.

7. Procédé selon la revendication 6, caractérisé par le fait que ledit élément intermédiaire (34) a la forme d'un tube entourant la zone d'extrémité arrière (46) du segment maintenu (12) et la zone d'extrémité de la fibre de transmission (68), ce tube étant muni d'une ouverture de vue, d'une ouverture d'introduction de chalumeau, d'une ouverture de manipulation, et d'une ouverture d'évacuation de gaz faisant face à l'ouverture d'introduction de chalumeau (50, 52, 54, 56),

—ladite étape par laquelle on met en alignement et on rapproche l'extrémité de la fibre de transmission (68) de l'extrémité arrière (46) du segment maintenu (12) comportant, après l'étape par laquelle on déplace l'élément de blocage (60), une étape supplémentaire d'alignement dans laquelle on introduit un manipulateur (84) par ladite ouverture de manipulation jusqu'au contact de la zone d'extrémité de la fibre de transmission (68) ou du segment maintenu (12) et on déplace ce manipulateur dans deux directions orthogonales et perpendiculaires à l'axe du segment maintenu.

—ladite étape par laquelle on chauffe se faisant par introduction d'un chalumeau (70) à travers l'ouverture d'introduction de chalumeau et chauffage à l'aide de ce chalumeau.

8. Procédé selon la revendication 7, caractérisé par le fait que ladite étape supplémentaire d'alignement comporte un éclairage (92) desdites zones d'extrémité (46, 68) par au moins un faisceau de lumière non diffuse, de manière à faire apparaître, à l'aide de la lumière traversant la matière de chacune de ces deux zones d'extrémité, au moins une ligne lumineuse de lumière réfléchie et/ou réfractée sur les parois de ces zones d'extrémité.

9. Procédé selon la revendication 8 caractérisé par le fait que ledit éclairage se fait par l'intermédiaire d'au moins une fibre optique d'éclairage (92).

10. Procédé de réalisation d'une connexion optique amovible entre deux fibres optiques "de transmission" (68) à l'aide de deux connecteurs complémentaires coopérant entre eux et comportant chacun un élément connectant (2, 2') muni de moyens de maintien (10, 10') aptes à maintenir un segment de fibre optique de diamètre prédéterminé et aptes à être guidés pour mettre le segment maintenu (12) en alignement et en contact par son extrémité avant avec un autre segment de fibre optique maintenu par l'élément connectant du connecteur complémentaire de manière à assurer la connexion optique entre ces deux segments maintenus, ce procédé étant caractérisé par le fait qu'il comporte les étapes suivantes:

—on dispose un segment de fibre optique (12) dans chaque élément connectant (2, 2') de manière à ce que ce segment soit maintenu par lesdits moyens de maintien (10, 10'), ce segment maintenu ayant une longueur inférieure à cinq centimètres et ayant son extrémité avant munie d'un revêtement antireflet,

—et on soude l'extrémité arrière de chacun des deux segments maintenus à l'extrémité de la fibre de transmission correspondante (68).

## Claims

1. An optical fibre connector which includes:

—a connecting element (2) provided with holding means (10) suitable for holding an optical fibre (12) of a predetermined diameter and suitable for being guided to align the held fibre with another optical fibre held by a connecting element of another connector, and to bring the ends of these two fibres into contact with each other to provide the optical connection between the two fibres;

—and a blocking element (60) which is integral with the connecting element and comprises blocking means behind the holding means for fixing an optical "transmission" fibre in alignment with the holding means so as to avoid any stress on the transmission fibre in front of the blocking means when a force is exerted on the transmission fibre behind the blocking means;

—characterized by the fact that it also includes a segment of optical fibre (12) held in the connection element (2), the length of this segment being less than five centimetres and its front end being covered with an anti-reflection coating,

—and an intermediate element (34) which makes the connecting element (2) integral with the blocking element (60), this intermediate element having at least one opening (50) which allows access to a zone of contact between the rear end (46) of said held segment (12) and the end of said transmission fibre (68), this opening being sufficiently wide to allow welding through it to provide optical continuity between the rear end of the held segment and the end of the transmission fibre.

2. A connector according to claim 1, characterized by the fact that it is provided with blockable sliding means (62, 64) to allow firstly a movement of the blocking element (60) in relation to the connecting element (2), parallel to said held segment (12) and to allow these two elements to be subsequently made completely integral with each other.

3. A connector according to claim 1, with a generally coaxial structure round an axis (4) parallel to said held segment (12), characterized by the fact that said intermediate element (34) is in the shape of a tube which surrounds said axis and has a plurality of openings (50, 52, 54, 56) angularly spaced round said contact zone,

—this connector also including a protective cover (30) which can slide parallel to said axis (4) so as to surround the intermediate element while stopping up the openings.

4. A method of connecting an optical "transmission" fibre to a connector comprising the following steps:

—a segment of optical fibre (12) shorter than five centimetres, with a diameter to which the connecting element is fitted, is inserted in the connecting element (2) of the connector and the segment is held in this element, the segment having a front end by which it can be connected and a free rear end (46);

—the end zone of the optical "transmission" fibre (68) which is to be connected to the connector is inserted in a blocking element (60) of the connector;

—the end of the transmission fibre is aligned with the rear end of the held segment and is brought close thereto;

—these two ends are heated so as to form a weld which provides optical continuity between the transmission fibre and the held segment;

—and the transmission fibre is fixed in relation to the connecting element by means of the blocking element (60) and of an intermediate element (34) which makes the blocking element integral with the connecting element.

5. A method according to claim 4, characterized by the fact that before inserting said fibre segment (12) in the connecting element (2), its front surface undergoes a treatment suitable for facilitating the transmission of light through this surface.

6. A method according to claim 4, characterized by the fact that the step during which the "transmission" fibre (68) and the rear end of the held segment (12) are aligned and are brought close to each other, itself comprises the following steps:

—the blocking element (60) is connected to the connecting element (2) by means of said intermediate element (34) so as to align the end zone of the transmission fibre with the held segment and so as to allow the blocking element to move in relation to the connecting element in a movement parallel to the held segment, this intermediate element being provided with at least one opening (50) to allow access to the rear end (46) of the held segment,

—the end zone of the transmission fibre is fixed in the blocking element, and

—the blocking element is moved in relation to the connecting element to bring the end of the transmission fibre close to the rear end of the held segment.

7. A method according to claim 6, characterized by the fact that the said intermediate element (34) is in the shape of a tube which surrounds the rear end zone (46) of the held segment (12) and the end zone of the transmission fibre (68), the tube being provided with an inspection opening, a blow-pipe insertion opening, a manipulation opening and a gas evacuation opening facing the blowpipe insertion opening (50, 52, 54 and 56),

—said step in which the end of the transmission fibre (68) is aligned with and brought close to the rear end (46) of the held segment (12) comprising, after the phase in which the blocking element (60) is moved, an extra alignment step in which a manipulator (84) is inserted through said manipulation opening until it comes into contact with the end zone of the transmission fibre (68) or with the held segment (12), and this manipulator is moved in two directions rectangular and perpendicular to the axis of the held segment,

—said heating phase being carried out by inserting a blowpipe (70) through the gas blowpipe insertion opening and by heating by means of this blowpipe.

8. A method according to claim 7, characterized by the fact that said extra alignment step consists of lighting (92) said end zones (46, 68) with at least one non-diffused light beam, so as to make at least one line of reflected and/or refracted light appear on the walls of these end zones by means of the light which passes through the material of each of these two end zones.

9. A method according to claim 8, characterized by the fact that said lighting is obtained by means of at least one lighting optical fibre (92).

10. A method of forming a detachable optical connection between two optical "transmission" fibres (68) by means of two complementary connectors which co-operate together and each of which comprises a connection element (2, 2') provided with holding means (10, 10') suitable for holding a segment of optical fibre of a predetermined diameter and suitable for being guided to align the held segment (12) and put its front end in contact with the end of another segment of optical fibre held by the connecting element of the complementary connector so as to connect these two held segments optically together, this method being characterized by the fact that it comprises the following steps:

—an optical fibre segment (12) is disposed in each connecting element (2, 2') so that the segment is held by said holding means (10, 10'), the held segment being shorter than five centimetres and having its front end provided with an anti-reflection coating;

—and the rear ends of each of the two held segments are welded to the end of the corresponding transmission fibre (68).

**Patentansprüche**

1. Verbinder für Lichtleitfasern mit

—einem Verbindungselement (2) mit Haltemitteln (10), die eine Lichtleitfaser (12) vorbestimmten Durchmessers halten können und die so geführt werden können, daß diese Faser mit ihrem vorderen Ende in Flucht zu und in Kontakt mit einer anderen Lichtleitfaser gehalten werden kann, die von einem Verbindungselement eines anderen Verbinders gehalten wird, wodurch die optische Verbindung zwischen diesen beiden Fasern erhalten wird,

—und einem mit dem Verbindungselement eine Einheit bildenden Blockierelement (60) mit Blockiermitteln (66) hinter den Haltemitteln, um eine Befestigung einer "Übertragungs"—Lichtleitfaser in Flucht mit diesen Haltemitteln zu ermöglichen, damit jede Krafteinwirkung auf diese Übertragungsfaser vor diesen Blockiermitteln verhindert wird, wenn man hinter diesen Blockiermitteln eine Kraft auf diese Faser ausübt, dadurch gekennzeichnet, daß er außerdem ein Segment einer Lichtleitfaser (12) enthält, das im Verbindungselement (2) gehalten wird und kürzer als fünf Zentimeter ist und dessen vorderes Ende mit einem Antireflexionsbelag versehen ist,

—und einem Zwischenelement (34), das die Einheit von Verbindungselement (2) und Blockierelement (60) herstellt und mindestens eine Öffnung (50) aufweist, die den Zugang zu einer Kontaktzone zwischen dem hinteren Ende (46) des gehaltenen Segments (12) und dem Ende der Übertragungsfaser (68) ermöglicht, wobei diese Öffnung groß genug ist, um durch sie eine Schweißung durchführen zu können, die die optische Kontinuität zwischen dem hinteren Ende dieses gehaltenen Segments und dem Ende der Übertragungsfaser herstellt.

2. Verbinder nach Anspruch 1, dadurch gekennzeichnet, daß er mit blockierbaren Gleitmitteln (62, 64) ausgerüstet ist, durch die zuerst eine Verschiebung des Blockierelements (60) in bezug auf das Verbindungselement (2) parallel zum gehaltenen Segment (12) und anschließend eine feste Verbindung der beiden Elemente ermöglicht wird.

3. Verbinder nach Anspruch 1, mit einer allgemein koaxialen Struktur um eine Achse (4) parallel zum gehaltenen Segment (12), dadurch gekennzeichnet, daß das Zwischenelement (34) die Form eines Rohrs aufweist, das die Achse umgibt und mehrere Öffnungen (50, 52, 54, 56) aufweist, die winkelmäßig um die Kontaktzone verteilt sind,

—und daß der Verbinder außerdem eine Schutzkappe (30) aufweist, die parallel zur Achse (4) so gleiten kann, daß sie' das Zwischenelement umgibt und die Öffnungen verschließt.

4. Verfahren zur Herstellung einer Verbindung zwischen einer "Übertragungs"-Lichtleitfaser und einem Verbinder, dadurch gekennzeichnet, daß es folgende Verfahrensschritte aufweist:

—man führt in ein Verbindungselement (2) des Verbinders ein Lichtleitfasersegment (12) mit einer Länge von weniger als fünf Zentimetern und mit einem Durchmesser, dem das Verbindungselement angepaßt ist, ein und hält dieses Segment im Element, wobei das Segment ein vorderes Ende, durch das die Verbindung hergestellt werden kann, und ein freies hinteres Ende (46) aufweist,

—man führt die Endzone (68) der "Übertragungs"-Lichtleitfaser, die mit dem Verbinder verbunden werden soll, in ein Blockierelement (60) des Verbinders ein,

—man bringt das Ende dieser Übertragungsfaser in Flucht zu und in die Nähe des hinteren Endes des gehaltenen Segments,

—man erhitzt diese beiden Enden derart, daß eine Schweißung entsteht, die die optisch Kontinuität zwischen dieser Übertragungsfaser und dem gehaltenen Segment herstellt,

—und man fixiert die Übertragungsfaser in bezug auf das Verbindungselement mithilfe des Blockierelements (60) und eines Zwischenelements (34), das die feste Verbindung des Blockierelements mit dem Verbindungselement herstellt.

5. Verfahren nach Anspruch 4, dadurch gekennzeichnet, daß man vor der Einführung des Fasersegments (12) in das Verbindungselement (2) die Frontfläche des Segments so behandelt, daß die Lichtübertragung durch diese Fläche erleichtert wird.

6. Verfahren nach Anspruch 4, dadurch gekennzeichnet, daß der Verfahrensschritt, durch den das Ende der Übertragungsfaser (68) in Flucht zu und in die Nähe des hinteren Endes des gehaltenen Segments (12) gebracht wird, selbst folgende Verfahrensschritte aufweist:

—man verbindet das Blockierelement (60) mit dem Verbindungselement (2) mithilfe des Zwischenelements (34) derart, daß die Endzone der Übertragungsfaser in Flucht mit dem gehaltenen Segment gebracht wird und daß das Blockierelement in bezug auf das Verbindungselement parallel zum gehaltenen Segment verschoben werden kann, wobei das Zwischenelement mindestens eine Öffnung (50) aufweist, durch die ein Zugang zum hinteren Ende (46) des gehaltenen Segments ermöglicht wird,

—man fixiert die Endzone der Übertragungsfaser im Blockierelement,

—und man verschiebt das Blockierelement in bezug auf das Verbindungselement derart, daß das Ende der Übertragungsfaser in die Nähe des hinteren Endes des gehaltenen Segments gebracht wird.

7. Verfahren nach Anspruch 6, dadurch gekennzeichnet, daß das Zwischenelement (34) die Form eines das hintere Ende (46) des gehaltenen Segments (12) und die Endzone der Übertragungsfaser (68) umgebenden Rohrs aufweist, wobei dieses Rohr mit einer Sichtöffnung, einer Öffnung zum Einführen des Lötrohrs, einer Arbeitsöffnung und einer Gasauslaßöffnung gegenüber der Öffnung zum Einführen des Lötrohrs (50, 52, 54, 56) versehen ist,

—daß der Verfahrensschritt, durch den das Ende der Übertragungsfaser (68) mit dem hinteren Ende (46) des gehaltenen Segments (12) in Flucht gebracht und ihm angenähert wird, nach dem Schritt, durch den das Blockierelement (60) verschoben wird, einen weiteren Verfahrensschritt zum In-Flucht-bringen aufweist, bei dem man einen Manipulator (84) durch die Arbeitsöffnung bis in Kontakt mit der Endzone der Übertragungsfaser (68) oder des gehaltenen Segments (12) bringt und diesen Manipulator in zwei Richtung lotrecht und senkrecht zur Achse des gehaltenen Segments verschiebt,

—daß der Verfahrensschritt, bei dem erhitzt wird, in der Einführung eines Lötrohrs (70) durch die Öffnung zur Einführung des Lötrohrs und Erhitzung mithilfe dieses Lötrohrs besteht.

8. Verfahren nach Anspruch 7, dadurch gekennzeichnet, daß der zusätzliche Verfahrensschritt zum In-Flucht-bringen eine Beleuchtung (92) der Endzonen (46, 68) durch mindestens einen nicht-diffusen Lichtstrahl aufweist, so daß mithilfe des Lichts, das das Material dieser beiden Endzonen durchquert, mindestens eine Lichtlinie reflektierten und/oder gebrochenen Lichts auf den Wänden der Endzonen erscheint.

9. Verfahren nach Anspruch 8, dadurch gekennzeichnet, daß die Beleuchtung mithilfe mindestens einer Beleuchtungslichtleitfaser (92) geschieht.

10. Verfahren zur Herstellung einer beweglichen optischen Verbindung zwischen zwei "Übertragungs"-Lichtleitfasern (68) mithilfe zweier sich ergänzender Verbinder, die zusammenarbeiten und je ein Verbindungselement (2, 2') aufweisen das mit Haltemitteln (10, 10') ausgerüstet ist, welche ein Segment einer Lichtleitfaser mit vorbestimmtem Durchmesser halten können und so geführt werden können, daß sie das gehaltene Segment (12) in Flucht zu und in Kontakt mit seinem vorderen Ende mit einem anderen Lichtleitfasersegment, das vom Verbindungselement des komplementären Verbinders gehalten wird bringen, wodurch die optische Verbindung zwischen diesen beiden gehaltenen Segmenten hergestellt wird, dadurch gekennzeichnet, daß es die folgenden Verfahrensschritte, aufweist:

—man führt ein Lichleitfasersegment (12) so in jedes Verbindungselement (2, 2') ein, daß dieses Segment von den Haltemitteln (10, 10') gehalten wird, wobei das Segment kürzer als fünf Zentimeter ist und sein vorderes Ende mit einem Antireflexionsbelag versehen ist,

—und man schweißt das hintere Ende jedes dieser beiden gehaltenen Segment an das Ende der entsprechenden Übertragungslichtleitfaser (68).

# FIG.1

# FIG.2

# FIG.3

# FIG.4

# FIG.5

FIG.6

## FIG.7

## FIG.8

# FIG.9

# FIG.10